# EUROPÄISCHE PATENTSCHRIFT

(11) **EP 0 477 653 B1**
(45) Veröffentlichungstag und Bekanntmachung des Hinweises auf die Patenterteilung: **26.07.1995**
(21) Anmeldenummer: 91115300.5
(22) Anmeldetag: 10.09.1991
(51) Int. Cl.: H01C 10/14, H01C 10/34

(54) **Drehwinkelgeber, insbesondere Lenkwinkelgeber für Kraftfahrzeuge**
Rotary encoder, in particular turning angle sensor for vehicles
Capteur de rotation en particulier, pour l'angle de braquage de véhicules

(30) Priorität: 12.09.1990 DE 9013001 U
(43) Veröffentlichungstag der Anmeldung: 01.04.1992
(73) Patentinhaber: Wilhelm Ruf KG, 80336 München (DE)
(72) Erfinder: Flierl, Werner, W-8458 Sulzbach-Rosenberg (DE)
(74) Vertreter: von Bülow, Tam, Dr.

(56) Entgegenhaltungen:
- DE-A- 2 341 358
- DE-A- 3 637 597
- DE-U- 8 912 785
- GB-A- 2 141 287

## Beschreibung

Die Erfindung bezieht sich auf einen Drehwinkelgeber, insbesondere Lenkwinkelgeber für Kraftfahrzeuge gemäß dem Oberbegriff des Anspruches 1. Bei Kraftfahrzeugen ist es aus verschiedenen Gründen wünschenswert, den Lenkeinschlag des Lenkrades und damit den Lenkwinkel der gelenkten Räder zu kennen, beispielsweise für die Steuerung der Härte von Stoßdämpfern bei Kurvenfahrt, für Antriebsschlupfregelungen oder die Steuerung einer Hinterradlenkung. Bei den üblichen Kraftfahrzeugen läßt sich das Lenkrad von Anschlag zu Anschlag zwischen zweieinhalb bis dreieinhalb Umdrehungen drehen. Ein einfaches Potentiometer an der Lenksäule kann daher wegen der Mehrdeutigkeit der Stellungen nicht verwendet werden. Es ist daher bekannt, zwei getrennte Potentiometer zu verwenden, von denen das eine vor dem Lenkgetriebe und das andere hinter dem Lenkgetriebe angeordnet ist. Das erste Potentiometer dient als Grobsensor und das zweite als Feinsensor.

Das DE-GM 89 12 785.4 beschreibt ein Tandem-Potentiometer, das zu diesen Zwecken eingesetzt werden kann. Beide Potentiometer werden von einer gemeinsamen Welle angetrieben. Das eine der Potentiometer wird direkt von der Welle angetrieben, während das andere über ein Untersetzungsgetriebe, das als Planetengetriebe ausgebildet ist, betätigt wird. Die Schleiffeder des nicht untersetzten Potentiometers ist dabei über mehrere Umdrehungen durchdrehbar, während das untersetzte Potentiometer bei diesen mehreren Umdrehungen der Welle nur einen Bereich von etwa 360° überstreicht.

Bei dem bekannten Tandem-Potentiometer sind die Widerstandsbahnen beider Potentiometer auf einer Seite einer Trägerplatte als konzentrische Kreise unterschiedlichen Durchmessers angeordnet und befinden sich also in einer gemeinsamen Ebene. Dementsprechend liegen auch die Schleiferfedern der beiden Potentiometer in einer Ebene, jedoch gegenüber der Achse der Welle radial versetzt. Dies hat den Nachteil, daß die elektrischen Widerstandswerte der Widerstandsbahnen beider Potentiometer aufgrund unterschiedlicher Länge im Regelfall auch unterschiedlich sind. Da die Schleiferfedern unterschiedlichen Abstand von der Mittelachse der Welle haben, wirkt sich ein Spiel bei der Befestigung der Schleiferfedern an dem Federträger auch unterschiedlich auf das Auflösungsvermögen, eine eventuelle Hysterese bei Drehrichtungsänderung und die Linearität der beiden Potentiometer aus.

Ausgehend von dem DE-GM 89 12 785 ist es Aufgabe der Erfindung, den Drehwinkelgeber der eingangs genannten Art dahingehend zu verbessern, daß seine elektrischen Eigenschaften wie Linearität, Hysteresefreiheit und Auflösungsvermögen verbessert sind, wobei gleichzeitig die Nennwerte der Widerstände beider Potentiometer weitestgehend übereinstimmen sollen.

Diese Aufgabe wird nach der Erfindung dadurch gelöst, daß beide Schleiferfedern in gleichem radialen Abstand von der Welle angeordnet sind und daß die Widerstandsbahnen beider Potentiometer gleichen Durchmesser aufweisen und axial gegeneinander versetzt sind.

Hierdurch wird erreicht, daß die Widerstandsbahnen beider Potentiometer übereinstimmende Nennwerte haben und hinsichtlich ihrer elektrischen Eigenschaften übereinstimmend aufgebaut sind, abgesehen vom Einfluß des Untersetzungsgetriebes.

Nach einer Weiterbildung der Erfindung sind die Widerstandsbahnen der beiden Potentiometer auf getrennten Widerstandsträgern angeordnet, wobei diese Widerstandsträger so angeordnet sind, daß ihre den Widerstandsbahnen abgewandten Seiten einander berühren. Die Widerstandsträger liegen also "Rücken an Rücken".

Allerdings ist es auch möglich, die Widerstandsträger so anzuordnen, daß ihre Widerstandsbahnen aufeinander zuweisen, wobei dann die beiden Schleiferträger im Zwischenraum zwischen den beiden Widerstandsträgern angeordnet sind.

Nach einer weiteren Ausgestaltung der Erfindung sind die Schleiferfedern an Federträgern befestigt, die gleichen Durchmesser aufweisen, wobei der eine Federträger einstückig mit der Welle verbunden ist und der andere Federträger als Planetenträger eines Planetengetriebes ausgebildet ist, wobei sich die Welle durch eine zentrale Öffnung der Widerstandsträger hindurch erstreckt.

Damit beide Potentiometer die gleichen elektrischen Eigenschaften haben, ist als Montagehilfe vorgesehen, daß beide Widerstandsträger, beide Federträger und mindestens ein Gehäuseteil je eine Öffnung aufweisen, wobei alle diese Öffnungen in einer Justierlage der Potentiometer miteinander fluchten. Als Montagehilfe kann dann ein Zentrierstift durch diese fluchtenden Öffnungen eingeführt werden, womit die für die Funktion des Potentiometers wesentlichen Teile exakt zueinander ausgerichtet sind.

Nach einer Weiterbildung der Erfindung trägt der als Planetenträger ausgebildete Federträger mehrere Planetenräder, von denen jedes zwei Zahnkränze unterschiedlichen Durchmessers und unterschiedlicher Zähnezahl aufweist. Hierdurch kann man bei kompaktem Aufbau ein höheres Übersetzungsverhältnis erhalten.

Nach einer Weiterbildung der Erfindung ist vorgesehen, daß am kleineren Außenumfang der Welle eine Lagerung vorgesehen ist, die sich durch die zentrale Öffnung der Widerstandsträger und eine zentrale Öffnung des Planetenträgers hindurch erstreckt und in axialer Richtung von dem ersten Federträger bis zu den Planetenrädern reicht. Hierdurch wird eine eindeutige axiale Lage der wesentlichen Komponenten des Drehwinkelgebers sichergestellt und auch eine Lagerung der sich drehenden Teile.

Eine vorteilhafte Ausgestaltung der Erfindung sieht vor, daß ein Anschlußkontakt des einen Potentiometers mit einem Anschlußkontakt des anderen Potentiometers unlösbar verbunden ist. Hierdurch und im Zusammenhang mit der erwähnten Lagerung werden die beiden Widerstandsträger eindeutig zueinander positioniert, so daß sie sich auch im späteren Betrieb nicht mehr verstellen können und somit die elektrischen Eigenschaften beider Potentiometer in dieser Hinsicht konstant bleiben. Vorzugsweise werden die entsprechenden Anschlußkontakte miteinander verschweißt.

Im folgenden wird die Erfindung anhand eines Ausführungsbeispieles im Zusammenhang mit der Zeichnung ausführlicher erläutert. Es zeigt:
- Fig. 1: einen Schnitt des Drehwinkelgebers nach der Erfindung;
- Fig. 2: einen Schnitt längs der Linie A-B der Fig. 1;
- Fig. 3: eine Draufsicht auf den Widerstandsträger des ersten Potentiometers und
- Fig. 4: eine Draufsicht auf den Widerstandsträger des zweiten Potentiometers.

Gleiche Bezugszeichen in den einzelnen Figuren bezeichnen gleiche Teile.

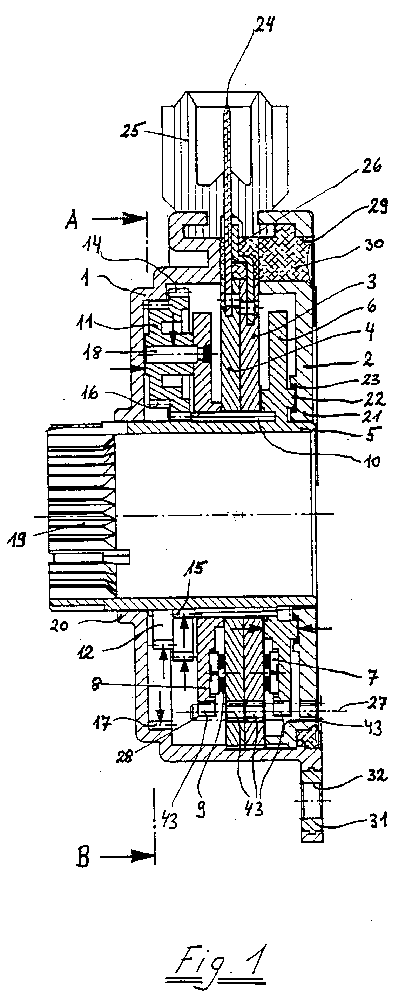

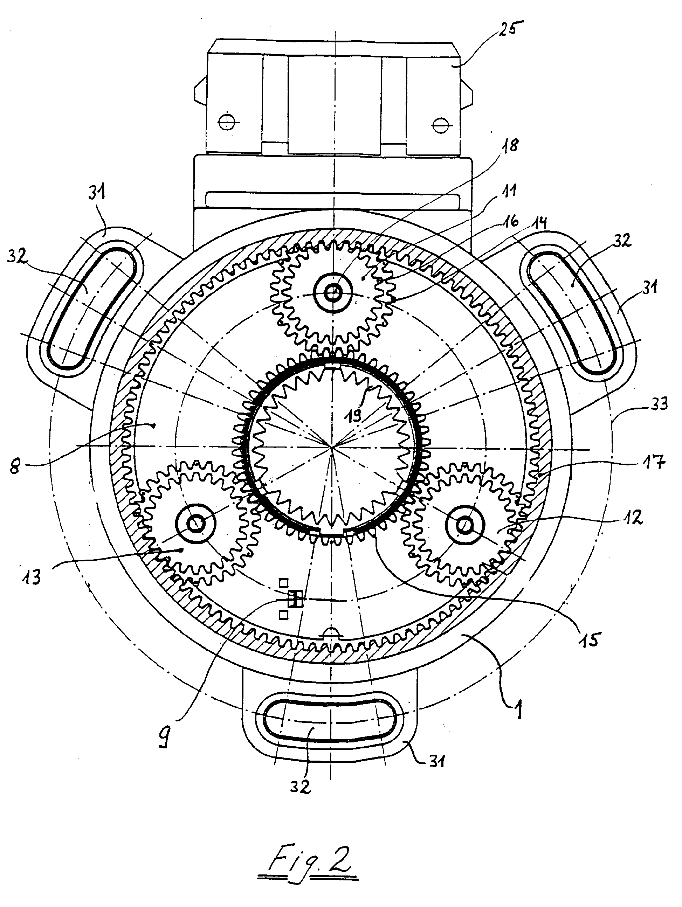

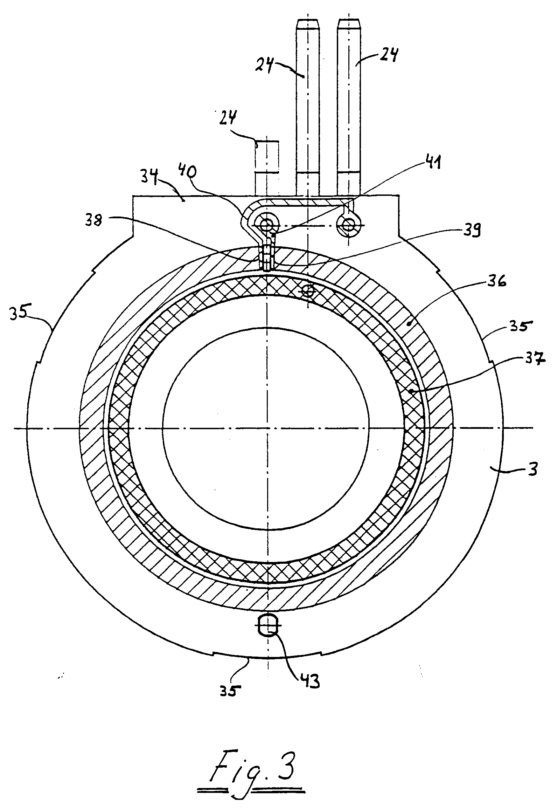

Der Drehwinkelgeber der Fig. 1 und 2 besitzt ein Gehäuse 1, dessen Grundkörper im wesentlichen zylindrisch ist und das durch einen Gehäusedeckel 2 verschlossen ist. Im Inneren des Gehäuses sind zwei scheibenförmige Widerstandsträger 3 und 4 so angeordnet, daß sich ihre Rückseiten berühren. Eine zylindrische Antriebswelle 5, die in einer zentralen Öffnung des Gehäuses 1 und des Gehäusedeckels 2 gelagert ist, greift durch eine zentrale Öffnung der beiden Widerstandsträger 3 und 4 hindurch und ist einstückig mit einem scheibenförmigen Federträger 6 verbunden, der sich von der Welle 5 radial nach außen erstreckt. An diesem Federträger 6 ist eine erste Schleiferfeder 7 mit mindestens zwei Schleifkontakten befestigt, die die ihr zugewandte Seite des ersten Widerstandsträgers 3 und zwar speziell eine Widerstandsbahn und eine Abgriffbahn (vgl. Fig. 3) kontaktieren und damit elektrisch miteinander verbinden. Der Widerstandsträger 3, der Federträger 6 und die Schleiferfeder 7 bilden ein erstes Potentiometer, das unmittelbar durch die Welle 5 betätigt wird. Unmittelbar bedeutet hierbei, daß eine Drehwinkeländerung der Welle 5 um einen Winkel α eine Drehung des Federträgers mit der Schleiferfeder um denselben Winkel α zur Folge hat.

Das zweite Potentiometer besteht aus dem zweiten Widerstandsträger 4, einem zweiten Federträger 8 und einer zweiten Schleiferfeder 9. Der zweite Federträger 8 ist als flache Scheibe ausgebildet, die denselben Durchmesser hat wie der erste Federträger 6. Die zweite Schleiferfeder 9 ist im gleichen radialen Abstand bezüglich der Drehachse der Welle 5 angeordnet wie die erste Schleiferfeder 7. Beide Schleiferfedern 7 und 9 sind gleich aufgebaut. Der zweite Federträger 8 ist über ein Planeten-Untersetzungsgetriebe mit der Welle 5 gekoppelt. Dabei bildet der zweite Federträger 8 den Planetenträger bzw. Planetenradträger des Planetengetriebes. Das Untersetzungsverhältnis dieses Planetengetriebes ist beliebig und wird im speziellen Fall eines Lenkwinkelgebers so gewählt, daß eine Drehung des Lenkrades von einem Endanschlag zum anderen Endanschlag (z.B. drei Umdrehungen) so untersetzt wird, daß die zweite Schleiferfeder dabei einen Bereich von weniger als einer vollen Umdrehung, d.h. weniger als 360° überstreicht.

Am kleineren Außenumfang der Welle 5 ist eine Lagerbuchse 10 eingespritzt. Diese Lagerbuchse 10 dient als Lagerung der Welle 5 und erstreckt sich in Axialrichtung von dem Federträger 6 durch die beiden Widerstandsträger 3 und 4 und durch den zweiten Federträger 8 hindurch und endet mit ihrer anderen axialen Stirnseite an einem Zahnkranz 15 für Planetenräder 11, 12 und 13 des Untersetzungsgetriebes. Diese drei Planetenräder 11, 12 und 13 sind längs eines Teilkreises in äquidistanten Abständen an dem zweiten Federträger 8 drehbar befestigt. Ein erster Zahnkranz 14 der Planetenräder 11 bis 13 kämmt mit einer Außenverzahnung 15 der Welle 5. Ein zweiter Zahnkranz 16 der Planetenräder 11 bis 13 kämmt mit einem Zahnkranz 17 an der Innenwandung des Gehäuses 1. Die beiden Zahnkränze 14 und 16 der einzelnen Planetenräder 11 bis 13 haben unterschiedlichen Durchmesser und unterschiedliche Zähnezahl. Der Durchmesser des Zahnkranzes 14 ist größer als der des Zahnkranzes 16. Die Planetenräder 11 bis 13 sind auf einer Achse 18 gelagert, die ihrerseits fest an dem zweiten Federträger 8 befestigt ist.

Die Welle 5 ist als Hohlwelle ausgebildet und besitzt an ihrer Eingangsseite eine Mitnehmerverzahnung 19, die mit einer Außenverzahnung des Teiles, dessen Drehwinkel erfaßt werden soll, im Eingriff steht, beispielsweise mit der Lenksäule eines Kraftfahrzeuges. Die Welle 5 ist in radialer Richtung an einem Lagerflansch 20 des Gehäuses 1 und einem Lagerflansch 21 des Gehäusedeckels 2 gelagert. In axialer Richtung ist sie durch einen axial vom ersten Federträger 6 vorstehenden, kreisförmigen Bund 22 am Gehäusedeckel 2 abgestützt, wobei dieser Bund 22 in einer umlaufenden Nut 23 des Gehäusedeckels geführt ist. In entgegengesetzter Richtung erfolgt eine axiale Zentrierung durch die drei Planetenräder 11 bis 13, deren von dem zweiten Federträger 8 fortweisende Stirnseite mit dem Gehäuse 1 in Berührung steht.

Die beiden "Rücken an Rücken" liegenden Widerstandsträger 3 und 4 besitzen jeweils mehrere Anschlußkontakte 24, die die Widerstandsbahnen und die Abgriffbahnen kontaktieren und die zu einem Steckverbinder 25 aus dem Gehäuse heraus geführt sind. Je ein Anschlußkontakt des ersten und des zweiten Widerstandsträgers sind an einer mit dem Bezugszeichen 26 bezeichneten Stelle miteinander verschweißt, womit die beiden Widerstandsträger 3 und 4 eindeutig zueinander fixiert sind.

Zur exakten Montage des Drehwinkelgebers besitzen die beiden Widerstandsträger 3 und 4, die beiden Federträger 6 und 8 und der Gehäusedeckel 2 je eine Öffnung, die längs einer gemeinsamen Achse 27 ausgerichtet sind und mit dieser Achse fluchten. Durch diese Öffnungen kann bei der Montage ein Zentrierstift 28 eingeführt werden, womit dann diese Teile in einer eindeutigen, vorbestimmten Stellung justiert sind. Ist diese Stellung eingenommen, so werden die erwähnten Anschlußkontakte miteinander verschweißt. Zur Abdichtung des Gehäuses wird dann eine im Gehäusedeckel 2 vorgesehene Durchgangsöffnung 29, die einen Zutritt zu den Kontakten 24 gestattet, mit Kunstharz 30 vergossen.

Zur Befestigung des Drehwinkelgebers sind radial von dem Gehäuse abstehende Flansche 31 mit Durchgangsöffnungen 32 vorgesehen, die in äquidistanten Abständen längs eines Teilkreises 33 angeordnet sind und durch die Befestigungsschrauben hindurchgesteckt werden können.

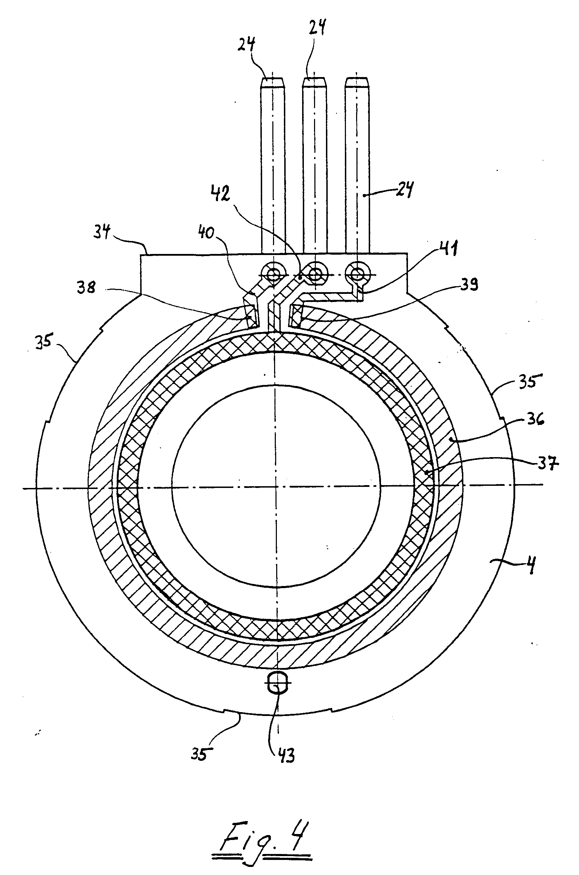

Die Fig. 3 und 4 zeigen Draufsichten der beiden Widerstandsträger 3 und 4. Beide Widerstandsträger haben die gleiche Form einer im wesentlichen kreisförmigen ebenen Scheibe aus Isoliermaterial, deren zu den Anschlußkontakten 24 weisende Seite 34 jedoch geradlinig verläuft. Am Außenumfang der Widerstandsträger 3 und 4 sind drei Einschnitte angebracht, in die entsprechende radial nach innen vorspringende Stege des Gehäuses eingreifen. Auf beiden Widerstandsträgern 3 und 4 ist je eine Widerstandsbahn 36 aufgebracht, die sich als kreisförmiger Streifen über nahezu den gesamten Vollkreis erstreckt. Konzentrisch zu diesen Widerstandsbahnen 36 und in einem gewissen Abstand zu den Widerstandsbahnen verläuft eine kreisförmige Abgriffsbahn 37, die einen Vollkreis bildet. Diese Abgriffsbahn hat einen geringen ohmschen Widerstand und ist beispielsweise aus Kupfer oder Silber. Beide Enden 38 und 39 der Widerstandsbahnen 36 sind über Leiterbahnabschnitte 40 bzw. 41 je mit einem der Anschlußkontakte 24 verbunden, beispielsweise vernietet. Ebenso sind die Abgriffsbahnen 37 mit einem der Anschlußkontakte 24 verbunden. Im Falle des ersten Widerstandsträgers 3 (Fig. 3), dessen Schleiferfeder sich mehrfach um den vollen Kreisumfang drehen läßt, liegen die beiden Enden 38 und 39 der Widerstandsbahn 36 sehr dicht nebeneinander, so daß die Leiterbahn zur Verbindung der Abgriffsbahn 37 mit dem zugeordneten Anschlußkontakt 24 nicht durch den Zwischenraum zwischen den beiden Enden 38 und 39 geführt werden kann. Dementsprechend ist entweder die Leiterbahn über eine Durchkontaktierung auf der anderen Seite des Widerstandsträgers angebracht oder bei in Spritzgußtechnik von dem Widerstandsträger umspritzten Anschlußkontakten ist dieser Anschlußkontakt länger gemacht, so daß er bis zu der Abgriffsbahn 37 reicht und dort vernietet ist.

Im Falle des zweiten Widerstandsträgers 4 (Fig. 4) kann dagegen ein Leiterbahnabschnitt 42 zwischen den beiden Enden 38 und 39 der Widerstandsbahn 36 hindurchgeführt und bis zu dem Verbindungspunkt mit dem zugeordneten Anschlußkontakt 24 herausgeführt werden.

In ihrer Einbaulage werden die beiden Widerstandsträger 3 und 4 "Rücken an Rücken" gelegt, so daß die beiden längs zur Mittellinie verlaufenden Anschlußkontakte 24 einander gegenüberliegen und miteinander verschweißt werden können. Aus diesem Grunde ist einer dieser beiden "Mittelkontakte" kürzer als die übrigen.

In den Fig. 3 und 4 ist schließlich noch die Öffnung zu erkennen, durch die bei der Montage der Zentrierstift 28 hindurchgesteckt wird. Diese Öffnung ist hier mit dem Bezugszeichen 43 bezeichnet.

Abschließend soll noch einmal darauf hingewiesen werden, daß die Widerstandsbahnen 36 der beiden Widerstandsträger 3 und 4 gleichen Durchmesser, gleiche Breite und gleiche Dicke der Widerstandsschicht haben, so daß ihre elektrischen Nennwerte weitestgehend gleich sind. Gleiches gilt in entsprechender Weise für die Abgriffsbahnen 37.

Selbstverständlich ist es auch möglich, einen gemeinsamen Widerstandsträger zu verwenden, der beidseitig mit den Widerstands- und Abgriffsbahnen beschichtet ist.

## Patentansprüche

1. Drehwinkelgeber, insbesondere Lenkwinkelgeber für Kraftfahrzeuge mit zwei von einer gemeinsamen Welle antreibbaren Potentiometern, deren Schleiffedern längs kreisförmiger Widerstandsbahnen verschiebbar sind, wobei die Schleiffeder des einen Potentiometers direkt und die Schleiffeder des anderen Potentiometers mittels eines Untersetzungsgetriebes mit der Welle gekoppelt sind,
dadurch gekennzeichnet,
daß beide Schleiffedern (7, 9) in gleichem radialen Abstand von der Welle (5) angeordnet sind und
daß die Widerstandsbahnen (36) beider Potentiometer gleichen Durchmesser aufweisen und axial gegeneinander versetzt sind.

2. Drehwinkelgeber nach Anspruch 1, dadurch gekennzeichnet, daß die Widerstandsbahnen (36) auf getrennten Widerstandsträgern (3, 4) angeordnet sind und daß die Widerstandsträger (3, 4) so angeordnet sind, daß ihre den Widerstandsbahnen (36) abgewandten Seiten einander berühren.

3. Drehwinkelgeber nach Anspruch 1 oder 2, dadurch gekennzeichnet, daß die Schleiffedern (7, 9) an Federträgern (6, 8) befestigt sind, die gleichen Durchmesser aufweisen, wobei der eine Federträger (6) einstückig mit der Welle (5) verbunden ist und der andere Federträger (8) als Planetenträger eines Planetengetriebes (11, 12, 13) ausgebildet ist und daß sich die Welle (5) durch eine zentrale Öffnung der Widerstandsträger (3, 4) hindurch erstreckt.

4. Drehwinkelgeber nach Anspruch 3, dadurch gekennzeichnet, daß beide Widerstandsträger (3, 4), beide Federträger (6, 8) und ein Gehäuseteil (2) je eine Öffnung (43) aufweisen, wobei alle diese Öffnungen (43) in einer Justierlage des Potentiometers längs einer gemeinsamen Achse (27) fluchten.

5. Drehwinkelgeber nach Anspruch 3, dadurch gekennzeichnet, daß der als Planetenträger ausgebildete Federträger (8) Planetenräder (11, 12, 13) trägt, von denen jedes zwei Zahnkränze (14, 17) unterschiedlichen Durchmessers und unterschiedlicher Zähnezahl aufweist.

6. Drehwinkelgeber nach einem der Ansprüche 1 bis 5, dadurch gekennzeichnet, daß am Außenumfang der Welle (5) eine Lagerbuchse (10) angeordnet ist, die sich durch die zentrale Öffnung der Widerstandsträger (3, 4) und eine zentrale Öffnung des Planetenträgers (8) hindurch erstreckt und in axialer Richtung von dem ersten Federträger (3) bis zu den Planetenrädern (11, 12, 13) verläuft.

7. Drehwinkelgeber nach einem der Ansprüche 2 bis 6, dadurch gekennzeichnet, daß ein Anschlußkontakt (24) des einen Potentiometers mit einem Anschlußkontakt (24) des anderen Potentiometers unlösbar verbunden ist.

## Claims

1. Rotary encoder, particularly a turning angle sensor for motor vehicles, having two potentiometers which are drivable by a common shaft, the brush springs of the potentiometers being movable along circular resistance paths, wherein the brush spring of one of the potentiometers is coupled directly to the shaft and the brush spring of the other potentiometer is coupled to the shaft by means of a reducing gear, characterised in that both brush springs (7, 9) are arranged at the same radial distance from the shaft (5), and that the resistance paths (36) of both potentiometers are of the same diameter and are axially offset with respect to one another.

2. Rotary encoder according to claim 1, characterised in that the resistance paths (36) are arranged on separate resistance holders (3, 4) and that the resistance holders (3, 4) are arranged so that their sides facing away from the resistance paths (36) touch one another.

3. Rotary encoder according to claim 1 or 2, characterised in that the brush springs (7, 9) are fixed to spring holders (6, 8) of the same diameter, wherein one of the spring holders (6) is integrally connected to the shaft (5) and the other spring holder (8) is designed as the sun wheel of a planetary gear (11, 12, 13) and that the shaft (5) extends through a central opening in the resistance holders (3, 4).

4. Rotary encoder according to claim 3, characterised in that both resistance holders (3, 4), both spring holders (6, 8) and a housing portion (2) each have an opening (43), wherein all these openings (43) are aligned in an adjusting position of the potentiometer along a common axis (27).

5. Rotary encoder according to claim 3, characterised in that the spring holder (8), which is designed as a sun wheel, has planet wheels (11, 12, 13), each of which has two toothed wheels (14, 17) of different diameter and with a different number of teeth.

6. Rotary encoder according to one of claims 1 to 5, characterised in that a bearing bush (10) is arranged on the outer periphery of the shaft (5), the bearing bush (10) extending through the central opening in the resistance holder (3, 4) and a central opening in the sun wheel (8) and extends in the axial direction from the first spring holder (3) to the planet wheels (11, 12, 13).

7. Rotary encoder according to one of claims 2 to 6, characterised in that a terminal contact (24) of one of the potentiometers is permanently connected to a terminal contact (24) of the other potentiometer.

## Revendications

1. Capteur d'angle de rotation, en particulier capteur d'angle de direction pour des véhicules automobiles à deux potentiomètres susceptible d'être entraînés par un arbre commun, dont les ressorts-frotteurs sont susceptibles de glisser le long de pistes de résistance de forme circulaire, le ressort-frotteur de l'un des potentiomètres étant couplé directement à l'arbre, tandis que le ressort-frotteur de l'autre potentiomètre est couplé à l'axe au moyen d'une démutiplication, caractérisé en ce que les deux ressorts-frotteurs (7, 9) sont disposés à la même distance radiale par rapport à l'arbre (5) et en ce que les pistes de résistance (36) des deux potentiomètres présentent le même diamètre en étant décalées axialement l'une par rapport à l'autre.

2. Capteur d'angle de rotation selon la revendication 1, caractérisé en ce que les pistes de résistance (36) sont disposées sur des supports de résistance séparés (3,4) et en ce que les supports de résistance (3, 4) sont disposés de telle façon que leurs faces opposées aux pistes de résistance (36) sont en contact l'une avec l'autre.

3. Capteur d'angle de rotation selon la revendication 1 ou 2, caractérisé en ce que les ressorts-frotteurs (7, 9) sont fixés sur des supports de ressorts (6,8) présentent le même diamètre, l'un des supports de ressorts (6) étant relié monobloc à l'arbre (5), tandis que l'autre support de ressort (8) est réalisé sous la forme d'un porte-satellites d'un train épicycloïdal (11, 12, 13), et en ce que l'arbre (5) pénètre à travers une ouverture centrale du support de résistance (3, 4).

4. Capteur d'angle de rotation selon la revendication 3, caractérisé en ce que les deux supports de résistance (3, 4), les deux supports de ressorts (6, 8), et une partie de boîtier (2) présentent chacun une ouverture (43) , toutes ces ouvertures (43) étant disposées en alignement le long d'un axe commun (27) en position d'ajustement du potentiomètre.

5. Capteur d'angle de rotation selon la revendication 3, caractérisé en ce que le support de ressort (8) réalisé en forme de porte-satellites porte des roues planétaires (11, 12, 13) dont chacune comporte deux couronnes dentées (14, 17) de diamètres différents et de nombres de dents différents.

6. Capteur d'angle de rotation selon l'une des revendications 1 à 5, caractérisé en ce qu'à la périphérie externe de l'arbre (5) est disposé un manchon de palier (10) qui pénètre à travers l'ouverture centrale des supports de résistance (3, 4) et à travers une ouverture centrale du porte-satellites (8) et qui s'étend en direction axiale du premier support de ressort (3) jusqu'aux roues planétaires (11, 12, 13).

7. Capteur d'angle de rotation selon l'une des revendications 2 à 6, caractérisé en ce qu'un contact de raccordement (24) de l'un des potentiomètres est relié de façon inséparable à un contact de raccordement (24) de l'autre potentiomètre.
